# EUROPEAN PATENT APPLICATION

(11) **EP 1 300 599 A2**
(43) Date of publication of application: **09.04.2003**
(21) Application number: 02256773.9
(22) Date of filing: 27.09.2002
(51) Int. Cl.: F16C 11/10, H04M 1/02, H04N 1/00, G06F 1/16

(54) **Electronic apparatus**

(30) Priority: 28.09.2001 JP 2001303111
(71) Applicant: SHARP KABUSHIKI KAISHA, Osaka 545-8522 (JP)
(72) Inventor: Tanaka, Hironori, Yamatokoriyama-shi, Nara (JP); Tsubai, Mitsuo, Tenri-shi, Nara (JP); Kawatsuri, Masaya, Soraku-gun, Kyoto (JP)
(74) Representative: Brown, Kenneth Richard

(57) **Abstract**

An object of the invention is to provide an electronic apparatus capable of holding a panel unit (4) at a desired tilt angle θ and smoothly angularly displacing the panel unit (4) irrespective of the weight of the panel unit (4). An attachment portion (15) protruding while facing the panel unit (4) is provided on a lower cabinet (2), a frictional member (14) made of silicone rubber having flexibility and elasticity is detachably attached to the attachment portion (15), and sliding members (11, 12) that slide on the frictional member (14) are provided on the rear surface of the panel unit (4) which rear surface faces the attachment portion (15), whereby a tilt holding force optimum for the weight of the panel unit (4) is caused.

## Description

### BACKGROUND OF THE INVENTION

### 1. Field of the Invention

The present invention relates to an electronic apparatus such as a telephone, a facsimile and a portable terminal, and more specifically, to a structure of a tilting mechanism capable of smoothly tilting a tilting portion provided in the electronic apparatus and holding the tilting portion at a given tilt angle with reliability.

### 2. Description of the Related Art

Conventionally, an electronic apparatus having a display portion implemented by a liquid crystal display or the like is provided with a tilting mechanism that holds the display portion on the electronic apparatus body so as to be angularly displaceable and is capable of adjusting the angle of the display portion to an easy-to-view angle.

For example, according to the prior art disclosed in Japanese Unexamined Patent Publication JP-A 9-160669 (1997), a shaft hole or a shaft is provided in a synthetic-resin-made rotary joint portion of a housing or the like of the tilting portion, a pair of helical compression springs are provided on a non-rotary member such as a synthetic-resin-made strut so that their compressive forces can be adjusted in opposite directions by an adjuster, and by engaging the shaft hole or the shaft of the tilting portion with the shaft or the shaft hole of the non-rotary member, the tilting portion is prevented from being angularly displaced downward under its own weight and the magnitude of the tilt holding force capable of smoothly angularly displacing the tilting portion can be adjusted to the optimum one.

Moreover, in Japanese Unexamined Patent Publication JP-A 2000-227763 (2000), the display portion which is the tilting portion is structured so that its tilt angle with respect to the electronic apparatus body can be held by angle holding means for making constant the compressive force between a sliding rubber attached to an arc-shaped part or a U-shaped part, and a sliding surface of a printed circuit board which is a part of the body case unit.

The prior art shown in JP-A 9-160669 intends to achieve a tilting mechanism capable of holding the tilting portion at a desired tilt angle and smoothly tilting the tilting portion by adjusting the spring force of the helical compression coil springs by changing the position of the adjuster, and changing the frictional force between the contacting parts of the rotary member and the non-rotary member. However, when the tilting display portion is increased in size and its weight increases accordingly, it is necessary to increase the frictional force between the contacting parts of the rotary member and the non-rotary member by increasing the spring force of the helical compression springs, and when this is done, it is necessary to increase the strengths of the rotary member and the non-rotary member in accordance with the increase in the spring force of the helical compression springs, so that the structure is increased in size and complicated.

Moreover, according to the prior art shown in JP-A 2000-227763, since the sliding rubber is always in line contact with the printed circuit board both when the tilt angle of the tilting portion with respect to the horizontal is large and when the tilt angle is small, the compressive force between the sliding rubber and the sliding surface is constant, so that the braking force is small when the tilt angle is small, that is, when the display portion is set at a low angle. Consequently, even a small impactive force caused, for example, by a finger touching the tilting portion causes the tilting portion to tilt downward under its own weight and be closed.

Moreover, according to this prior art, since the area of contact between the sliding rubber and the printed circuit board which are in line contact with each other is small as mentioned above and the sliding rubber slides on the same sliding surface, the force to hold the tilting portion decreases due to abrasion and adhesion of dust to the sliding surface and the impact when the tilting portion is closed is large.

### SUMMARY OF THE INVENTION

An object of the invention is to provide an electronic apparatus capable of holding the tilting portion at a desired tilt angle and smoothly angularly displacing the tilting portion irrespective of the weight of the tilting portion.

The invention relates to an electronic apparatus comprising:
an electronic apparatus body;
a tilting portion provided on the electronic apparatus body so as to be angularly displaceable about a rotation axis line;
an attachment portion provided on the electronic apparatus body so as to protrude while facing the tilting portion;
a frictional member made of a material having flexibility and elasticity, and attached to the attachment portion; and
a sliding member provided on a rear surface of the tilting portion which rear surface faces the attachment portion, for sliding on the frictional member over an angular displacement range of the tilting portion.

According to the invention, the frictional member is attached to the attachment portion provided on the electronic apparatus, and the sliding member is provided on the rear surface of the tilting portion. When the tilting portion is angularly displaced about the rotation axis line with respect to the electronic apparatus body, the sliding member slides on the frictional member, and at this time, the sliding member receives from the frictional member a frictional force in a direction opposite to the angular displacement direction.

With respect to the frictional force caused when the tilting portion is angularly displaced, since the frictional member is made of a material having flexibility and elasticity, the frictional member is elastically deformed by the sliding member in accordance with the angular displacement direction and the angular displacement position of the tilting portion, and the area of contact changes in accordance with the elastic deformation, whereby the frictional force acting on the sliding member can be reduced.

With respect to the change of the frictional force, the configuration and the contact position of the sliding member are set so that the area of contact of the sliding member with the frictional member or the pushing force of the sliding member against the frictional member increases as the tilt angle of the tilting portion with respect to the horizontal decreases. By doing this, even when the tilting portion is increased in size and its weight increases accordingly, the tilting portion can be held at a given tilt angle with reliability and can be smoothly angularly displaced.

Moreover, in the invention, it is preferable that the sliding member includes a plate for sliding on a side of the frictional member over the angular displacement range of the tilting portion.

According to the invention, since the sliding member comprises the plate sliding on the side of the frictional member, under a condition where the tilting portion is held at a fixed tilt angle, a large static frictional force can be caused to act by the side of the frictional member elastically pushing the sliding member. Moreover, when the tilting portion is angularly displaced, the frictional member for elastically pushes the sliding member while being deformed in the direction of movement of the sliding member and at this time, the dynamic frictional force is smaller than the static frictional force, so that a tilt holding force appropriate for the weight of the tilting portion can be obtained with a simple structure.

Further, in the invention, it is preferable that the sliding member includes a plate spring for elastically pushing a free end of the frictional member over the angular displacement range of the tilting portion.

According to the invention, since the sliding member comprises the plate spring for elastically pushing the free end of the frictional member, a plate spring having a spring force appropriate for the weight of the tilting portion can be adopted as the plate spring, so that a tilt holding force appropriate for the weight of the tilting portion can be obtained with a simple structure.

Further, in the invention, it is preferable that the sliding member includes a plate for sliding on a side of the frictional member over the angular displacement range of the tilting portion, an area of contact of the sliding member with the side of the frictional member decreases as the tilting portion is angularly displaced in an opening direction with respect to the electronic apparatus, and the area of contact of the sliding member with the side of the frictional member increases as the tilting portion is angularly displaced in a closing direction with respect to the electronic apparatus.

According to the invention, as the tilt angle of the tilting portion with respect to a horizontal plane decreases, that is, approaches horizontal, the tilt moment in the closing direction that acts on the tilting portion increases, and with this, the area of contact increases to increase the frictional force, so that the tilt holding force is increased. With this, an appropriate tilt holding force can be always obtained, with a simple structure, for the tilting portion tilted at a desired tilt angle, by increasing the resistance moment that acts against the tilt moment acting on the tilting portion in spite of the change of the weight of the tilting portion.

Further, in the invention, it is preferable that the sliding member includes a plate spring for elastically pushing a free end of the frictional member over the angular displacement range of the tilting portion, and the plate spring has a rough sliding surface having a higher sliding frictional force on the frictional member than that of the plate spring.

According to the invention, since the frictional member is provided with the sliding surface having a higher sliding frictional force on the frictional member than that of the plate spring, even when the tilting portion is increased in size and its weight increases accordingly, an optimum tilt holding force can be obtained by easily increasing the frictional force between the sliding member and the frictional member.

Further, in the invention, it is preferable that the sliding member includes a plate spring for elastically pushing a free end of the frictional member over the angular displacement range of the tilting portion, and on the plate spring, a plurality of bent portions convexly bent outward with respect to the rear surface of the tilting portion is formed.

According to the invention, since the plate spring on which the bent portions are formed as the sliding member is used, the frictional member is brought into contact with parts between the bent portions of the plate spring to thereby support in multiple steps with a large supporting force the angular displacement of the tilting portion in the closing direction, and an undesired angular displacement of the tilting portion in the closing direction due to the weight of the tilting portion can be prevented with reliability. Moreover, since the area of contact of the plate spring with the frictional member is, for example, linear and small under a condition where the bent portions are in contact with the frictional member, the tilting portion can be angularly displaced with a small operating force both in the opening direction and in the closing direction. Thus, a tilt holding force appropriate for the weight of the tilting portion can be obtained with a simple structure.

Further, in the invention, it is preferable the frictional member is detachably attached to the attachment portion.

According to the invention, since the frictional member is detachably attached to the attachment portion, attachment of the frictional member at the time of manufacture, and attachment and detachment of the frictional member when a worn, deteriorating or damaged frictional member is replaced can be easily performed, so that the productivity and the maintainability of the electronic apparatus can be improved.

In the invention, it is preferable that the attachment portion includes a protrusion which is inserted into the frictional member and a latching portion formed integrally with the protrusion so as to bend downward from the tip of the protrusion, and the frictional member includes an insertion hole formed so as to be opened downward through an opening to allow the latching portion to pass therethrough and is detachably attached to the attachment portion.

According to the invention, since when the frictional member is pushed upward by the sliding member at a time of angular displacement of the tilting portion, the latching portion outwardly protrudes through the opening and is latched to a peripheral portion of the frictional member facing the opening, the frictional member is prevented from being detached from the attachment portion.

### BRIEF DESCRIPTION OF THE DRAWINGS

Other and further objects, features, and advantages of the invention will be more explicit from the following detailed description taken with reference to the drawings wherein:
FIG. 1 is a perspective view showing the appearance of a telephone having a facsimile function according to an embodiment of the invention;
FIG. 2 is an exploded perspective view showing a panel unit viewed from the rear surface side, and a neighborhood of the area of an upper cabinet covered when the panel unit is closed;
FIG. 3 is a perspective view of a frictional member viewed obliquely from below;
FIG. 4 is an enlarged cross-sectional view of a neighborhood of the frictional member;
FIGs. 5A and 5B are views of assistance in explaining tilting of the panel unit, FIG. 5A showing the held condition of the panel unit when the tilt angle θ is large, FIG. 5B showing the held condition of the panel unit when the tilt angle θ is small;
FIG. 6 is a graph showing a relationship between the tilt angle θ and operating forces F1 and F2 in an angular displacement direction at a top end which forces F1 and F2 are necessary for the angular displacement of the panel unit in an opening direction A1 and in a closing direction A2;
FIG. 7 is a cross-sectional view of a part of an electronic apparatus according to another embodiment of the invention;
FIG. 8 is an exploded perspective view of a panel unit of the electronic apparatus viewed from the rear surface side; and
FIG. 9 is a perspective view of the panel unit viewed from the rear surface side.

### DETAILED DESCRIPTION OF THE PREFERRED EMBODIMENTS

Now referring to the drawings, preferred embodiments of the invention are described below.

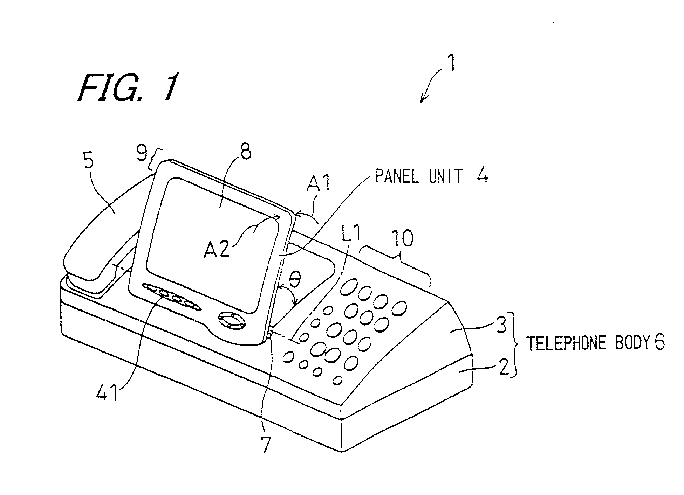

FIG. 1 is a perspective view showing the appearance of a telephone 1 having a facsimile function according to an embodiment of the invention. The telephone 1 as the electronic apparatus includes a lower cabinet 2, an upper cabinet 3, a panel unit 4 as the tilting portion provided on the upper cabinet 3, and a handset 5 hung on a side part of the upper cabinet 3. The lower cabinet 2 and the upper cabinet 3 constitute a telephone body 6 as the electronic apparatus body.

The panel unit 4 has its base end coupled to the upper cabinet 3 on the rear surface side so as to be angularly displaceable about a rotation axis line L1 by a rotary bearing 7 and to be detachably attachable, and by operating a top end 9 of the panel unit 4 with fingers in the direction of the arrow A1 when the panel unit 4 is opened and in the direction of the arrow A2 when the panel unit 4 is closed, a liquid crystal 8 can be set at an easy-to-view angle, that is, the tilt angle θ can be adjusted to the easy-to-view angle with the rotation axis line L1 as the center of the angular displacement.

The upper cabinet 3 has a telephone key input portion 10 having a plurality of keys for inputting telephone numbers and the like. The panel unit 4 has a display key input portion 41 having a plurality of keys for selecting or switching the display mode displayed on a liquid crystal display 8. Since the display key input portion 41 is provided on the panel unit 4, it can be performed to, when the line is connected once, raise the panel unit 4 at a desired tilt angle θ and operate the display key input portion 41 provided on the panel unit 4 while viewing the contents displayed on the liquid crystal display 8. Thus, convenience is improved in viewability and operability.

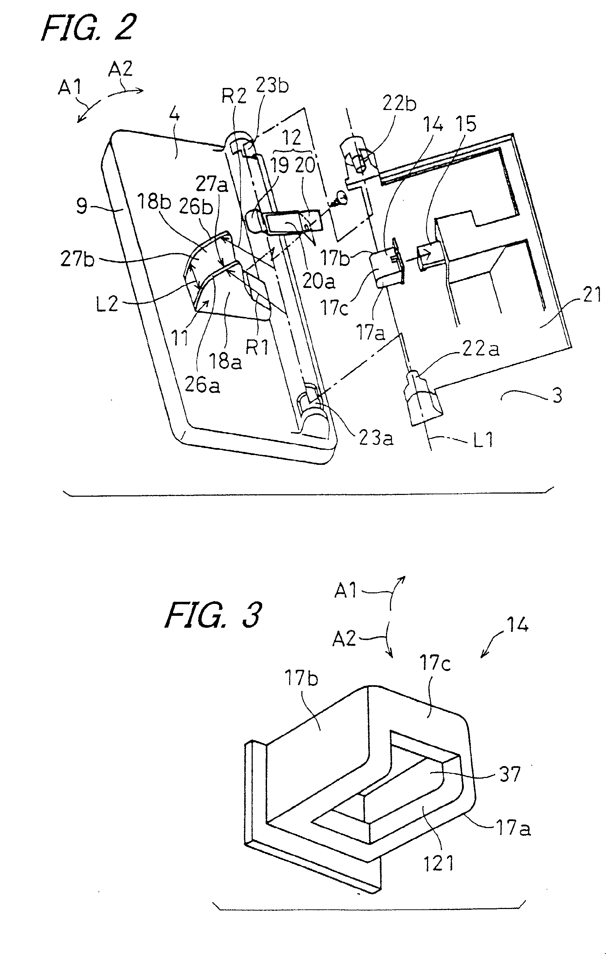

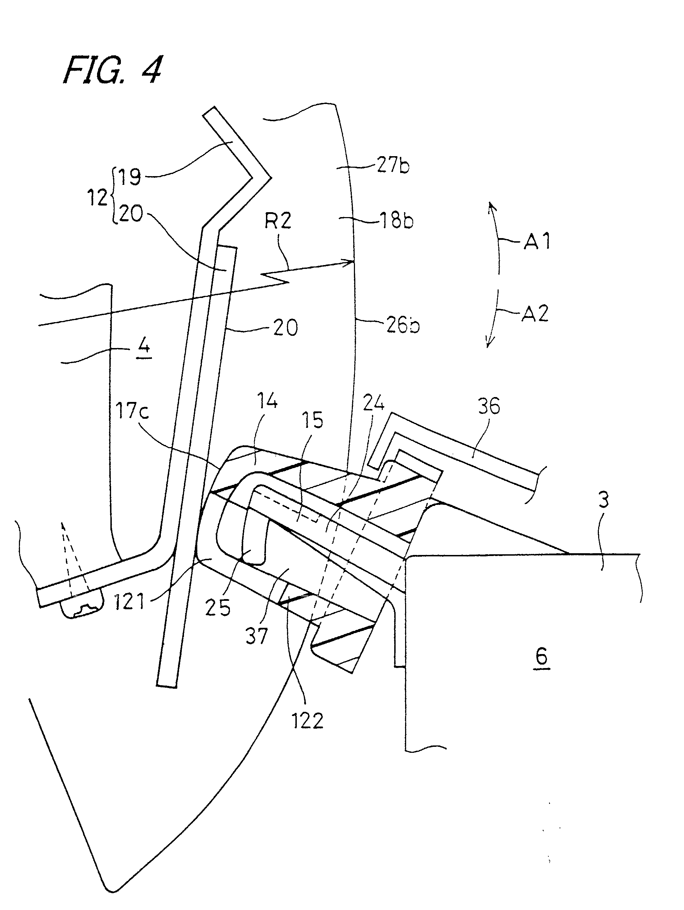

FIG. 2 is an exploded perspective view showing the panel unit 4 viewed from the rear surface side, and a neighborhood of the area of the upper cabinet 3 covered when the panel unit 4 is closed. FIG. 3 is a perspective view of a frictional member 14 viewed obliquely from below. FIG. 4 is an enlarged cross-sectional view of a neighborhood of the frictional member 14. The telephone 1 includes the following as a structure for supplying the panel unit 4 with an optimum tilt holding force: an attachment portion 15 provided on the upper cabinet 3 so as to protrude while facing the panel unit 4; the frictional member 14 made of silicone rubber which is a material having flexibility and elasticity, and detachably attached to the attachment portion 15; and two sliding members 11 and 12 provided on the rear surface of the panel unit 4 which rear surface faces the attachment portion 15, and sliding on the frictional member 14 over the angular displacement range of the panel unit 4.

The first sliding member 11 comprises a pair of plates 18a and 18b sliding on sides 17a and 17b of the frictional portion 14 over the angular displacement range of the panel unit 4. The second sliding member 12 comprises a plate spring 19 for elastically pushing a free end 17c of the frictional member 14 over the angular displacement range of the panel unit 4, and a rough sheet 20 bonded to the plate spring 19 with an adhesive and having a rough sliding surface 20a having a higher sliding frictional force on the frictional member 14 than that of the plate spring 19. The rough sheet 20 is implemented, for example, by a rubber mixed with cork powder. By minimizing the wear of the silicone-rubber-made frictional member 14 due to sliding, a large frictional force can be obtained.

Since the rough sheet 20 is provided on the plate spring 19 as described above, a moderate frictional force by the sliding contact between the frictional member 14 and the rough sheet 20 is obtained, the edges of the plate spring 19 on the side that is in contact with the frictional member 14 are never directly in contact with the frictional member 14 because of the presence of the rough sheet 20, and the edges prevent the frictional member 14 from wearing away, so that the durability of the frictional member 14 is improved.

The plates 18a and 18b of the first sliding member 11 slide on the sides 17a and 17b of the frictional portion 14 over the angular displacement range of the panel unit 4. The area of contact with the sides 17a and 17b of the frictional member 14 is decreased as the panel unit 4 is angularly displaced in the opening direction A1 with respect to the telephone body 6, and the area of contact with the sides 17a and 17b of the frictional member 14 is increased as the panel unit 4 is angularly displaced in the closing direction A2 with respect to the telephone body 6. The second sliding member 12 elastically pushes the free end 17c of the frictional member 14 over the angular displacement range of the panel unit 4.

In the upper cabinet 3, an opening 21 is formed in the area to which the rear surface of the panel unit 4 is opposed when the panel unit 4 is closed, and the attachment portion 15 is provided so as to face the outside from the opening 21. In a lower part of the rear surface of the panel unit 4, concave portions 23a and 23b in which a pair of pins 22a and 22b of the panel unit 4 are fitted are provided. The pins 22a and 22b are integrally formed on both sides of the opening 21 so as to protrude. With the pins 22a and 22b fitted in the concaves 23a and 23b, the panel unit 4 is supported so as to be angularly displaceable in the directions of the arrows A1 and A2.

The attachment portion 15 has a protrusion 24 inserted in the frictional member 14, and a latching portion 25 formed integrally with the protrusion 24 so as to bend downward (downward in FIG. 4) from the tip of the protrusion 24. In the frictional member 14, an insertion hole 37 allowing the latching portion 25 to pass therethrough is formed so as to be opened downward through an opening 121. When the frictional member 14 is pushed upward by the rough sheet 20 at a time of angular displacement of the panel unit 4 to an arrow A1 direction, the latching portion 25 outwardly protrudes through the opening 121 and is latched to a peripheral portion 122 of the frictional member 14 facing the opening 121, whereby the frictional member 14 is prevented from being detached from the attachment portion 15. In an upper part in the center of the base of the attachment portion 15, a rib 36 is provided for preventing the frictional member 14 from being detached when the frictional member 14 is elastically deformed in the angular displacement direction A1 or A2 due to the sliding frictional force caused when the panel unit 4 is angularly displaced in the direction of the arrow A1 or A2.

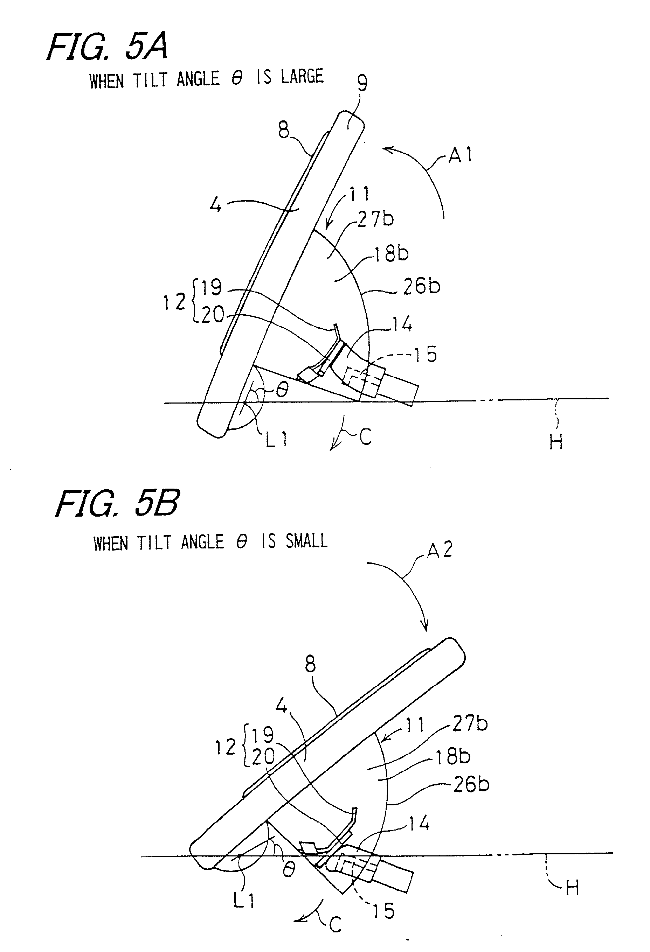

FIGs. 5A and 5B are views of assistance in explaining tilting of the panel unit 4. FIG. 5A shows the held condition of the panel unit 4 when the tilt angle θ is large. FIG. 5B shows the held condition of the panel unit 4 when the tilt angle θ is small. As described above, the frictional member 14 is attached to the attachment portion 15 provided on the telephone body 6, and the sliding member 11 is provided on the rear surface of the panel unit 4. As shown in FIG. 5A, when the panel unit 4 is angularly displaced about the rotation axis line L1 in the opening direction A1 with respect to the telephone body 6, the plates 18a and 18b slide on the frictional member 14 in the same direction. At this time, the plates 18a and 18b receive from the frictional member 14 a frictional force in a direction C opposite to the angular displacement direction A1.

With respect to the frictional force caused when the panel unit 4 is opened, since the frictional member 14 is made of a material having flexibility and elasticity, the frictional member 14 is elastically deformed by the plates 18a and 18b in accordance with the angular displacement direction A1 and the angular displacement position of the panel unit 4, and the area of contact decreases in accordance with the elastic deformation, whereby the frictional force acting on the plates 18a and 18b can be reduced.

In other words, as the tilt angle θ of the panel unit 4 with respect to a horizontal plane H decreases, that is, approaches horizontal, the tilt moment in the closing direction A2 that acts on the panel unit 4 increases, and with this, the area of contact increases to increase the frictional force, so that the tilt holding force is increased. With this, an appropriate tilt holding force can be always obtained, with a simple structure, for the panel unit 4 tilted at a desired tilt angle θ, by increasing the resistance moment that acts against the tilt moment acting on the panel unit 4 in spite of the change of the weight of the panel unit 4.

Thus, with respect to the change of the frictional force acting from the frictional member 14 on the plates 18a and 18b, as shown in FIG. 5B, in order that the area of contact of the plates 18a and 18b with the frictional member 14 or the pushing force of the plates 18a and 18b against the frictional member 14 increases as the tilt angle θ of the panel unit 4 with respect to the horizontal plane H decreases, radii R1 and R2 of the plates 18a and 18b from the rotation axis line L1 to perimeters 26a and 26b (see also FIG. 2) and the distance L2 between opposed inner surfaces 27a and 27b of the plates 18a and 18b are set so as to decrease in the direction of the arrow A1. By doing this, even when the panel unit 4 is increased in size and its weight increases accordingly, the panel unit 4 can be held at a given tilt angle θ with reliability and can be smoothly angularly displaced.

Moreover, since the plates 18a and 18b slide on the sides 17a and 17b of the frictional member 14 so that a frictional force is caused in the direction C opposite to the angular displacement direction, under a condition where the panel unit 4 is held at a fixed tilt angle *θ*, a large static frictional force can be caused to act by the sides 17a and 17b of the frictional member 14 for elastically pushing the plates 18a and 18b. Moreover, when the panel unit 4 is angularly displaced, the frictional member 14 elastically pushes the inner surfaces 27a and 27b while being deformed in the direction of movement of the plates 18a and 18b and at this time, the dynamic frictional force is smaller than the static frictional force, so that an appropriate tilt holding force where no shift is caused due to the weight of the panel unit 4 can be obtained with a simple structure.

Further, since the second sliding member 12 includes the plate spring 19 for elastically pushing the free end 17c of the frictional member 14, a plate spring having a spring force appropriate for the weight of the panel unit 4 can be adopted as the plate spring 19, so that a tilt holding force appropriate for the weight of the panel unit 4 can be obtained with a simple structure.

Further, since the frictional member 14 is detachably attached to the attachment portion 15, attachment of the frictional member at the time of manufacture, and attachment and detachment of the frictional member when a worn, deteriorating or damaged frictional member is replaced can be easily performed, so that the productivity and the maintainability of the telephone 1 can be improved.

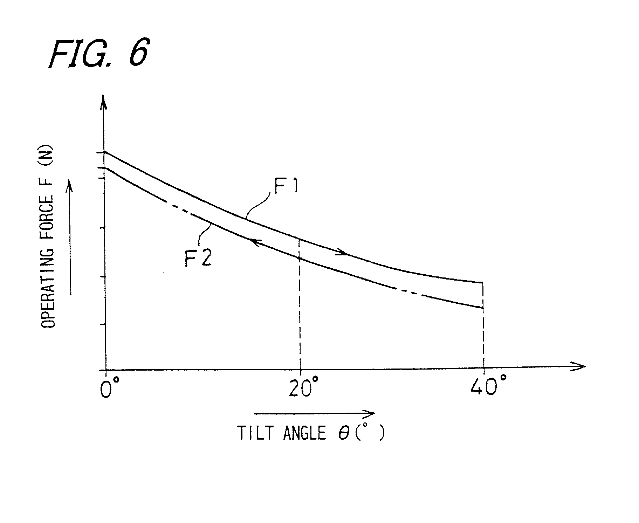

FIG. 6 is a graph showing a relationship between the tilt angle θ and operating forces F1 and F2 in the angular displacement direction at the top end which forces F1 and F2 are necessary for the angular displacement of the panel unit 4 in the opening direction A1 and in the closing direction A2. To check variations in the operating forces F1 and F2 according to the tilt angle θ of the panel unit 4, the inventor of the invention attached a measuring instrument such as a spring balance to the top end of the panel unit 4 which top end was farthest from the rotation axis line L1, an arc-shaped locus along which the top end should move at the time of the angular displacement was assumed, the panel unit 4 was pulled in the direction of the tangent to the locus, and the tensile load caused at that time was measured. This measurement was performed, both when the panel unit 4 was opened and when the panel unit 4 was closed, in the following three positions: when the minimum tilt angle θ where the panel unit 4 was closed with respect to the upper cabinet 3 so as to be substantially horizontal was 0°; when the maximum tilt angle θ where the panel unit 4 was opened with respect to the upper cabinet 3 was 40°; and when a middle tilt angle θ which was the midpoint of the minimum and the maximum tilt angles was 20°.

In the case where the panel unit 4 was opened, when the tilt angle θ was 0°, the operating force F1 was 5.4 N (approximately 550 gf), when the tilt angle θ was 20°, the operating force F1 was approximately 3.5 N (360 gf), and when the tilt angle θ was 40°, the operating force F1 was approximately 2.6 N (270 gf). In the case where the panel unit 4 was closed, when the tilt angle θ was 40°, the operating force F2 was approximately 2.4 N (240 gf), when the tilt angle θ was 20°, the operating force F2 was approximately 3.2 N (330 gf), and when the tilt angle θ was 0°, the operating force F2 was approximately 5.2 N (530 gf). These points were plotted and connected by a smooth line, whereby the curves F1 and F2 of FIG. 6 were obtained.

As is apparent from the figure, it was confirmed that according to the structure of the invention, a smooth tilt holding force is obtained on the panel unit 4 both when the panel unit 4 is opened and when the panel unit 4 is closed.

Further, as sliding members, by the first sliding member 11 comprising the two plates 18a and 18b sliding on the sides 17a and 17b of the frictional member 14, a frictional force can be obtained both in the opening direction A1 and in the closing direction A2, and by the second sliding member 12 comprising the plate spring 19 and the rough sheet 20, a large frictional force can be obtained by increasing the area of contact by elastically deforming a neighborhood of the free end 17c of the frictional member 14 in the closing direction A2, so that the panel unit 4 can be stopped at a desired angle against the increase in the weight of the panel unit 4 with a large resisting force in the closing direction A2, and can be smoothly moved in the closing direction A2 without the need for an unnecessarily large force.

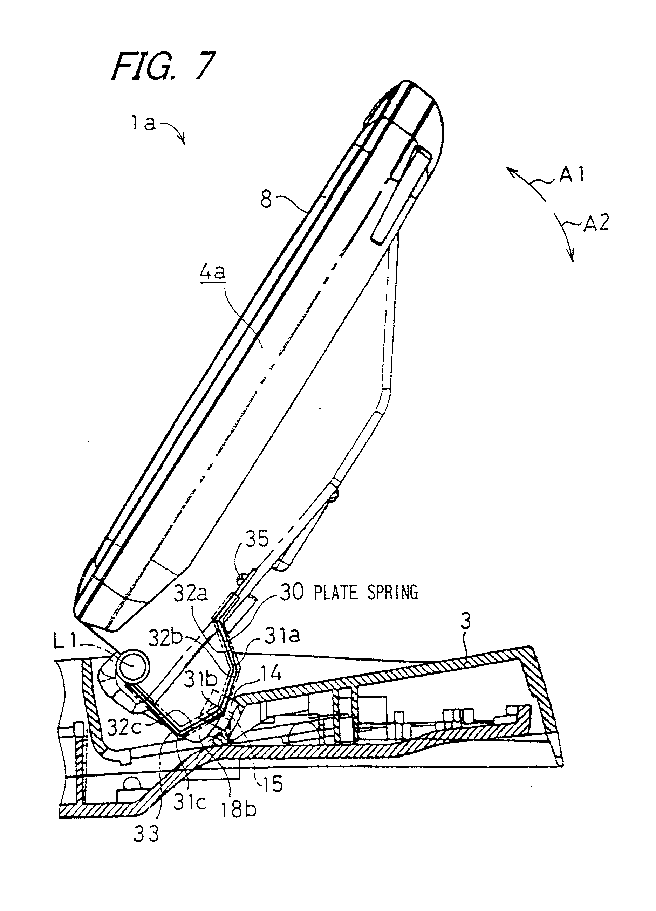

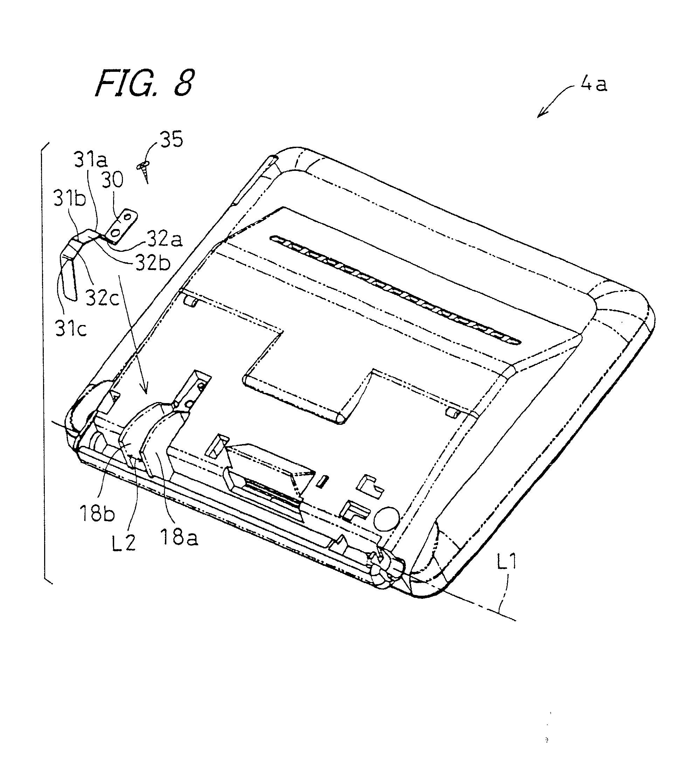

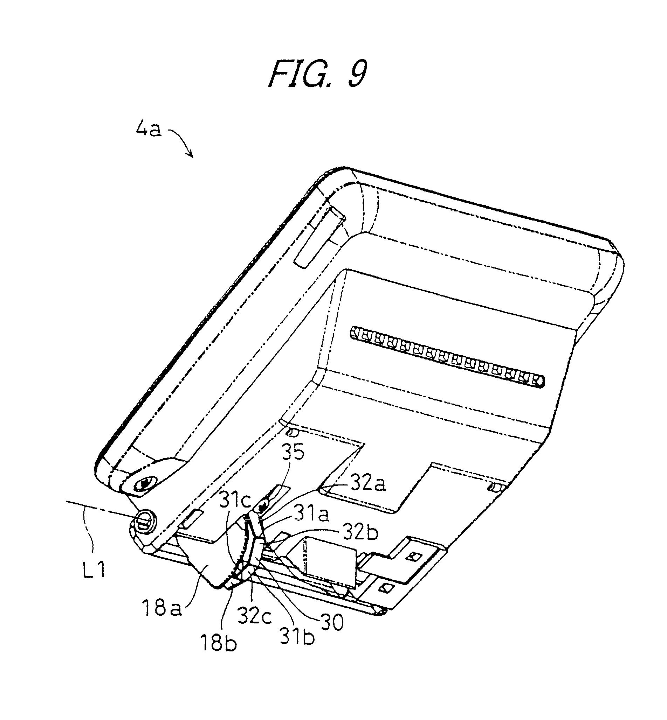

FIG. 7 is a cross-sectional view of a part of an electronic apparatus 1a according to another embodiment of the invention. FIG. 8 is an exploded perspective view of a panel unit 4a of the electronic apparatus 1a viewed from the rear surface side. FIG. 9 is a perspective view of the panel unit 4a viewed from the rear surface side. The elements corresponding to those of the above-described embodiment are designated by the same reference numerals. While the electronic apparatus 1a of this embodiment is similar to the above-described embodiment in that similar advantages are obtained by a common structure, what is worthy of note is that a plate spring 30 for elastically pushing a free end of a frictional member 14 over the angular displacement range of the panel unit 4a is provided as the second sliding member 12. The plate spring 30 has its one end detachably fixed to a back wall of the panel unit 4a with a screw 35.

On the plate spring 30, a plurality of bent portions 31a, 31b and 31c convexly bent outward with respect to the rear surface of the panel unit 4a is formed. The plate spring 30 is fitted between plates 18a and 18b. The plates 18a and 18b are similar to those of the above-described embodiment in that the plates 18a and 18b elastically sandwich sides 17a and 17b of the frictional member 14 from both sides and that the plate spring 30 elastically pushes the free end 17c of the frictional member 14.

By using the plate spring 30 on which the bent portions 31a to 31c are formed as described above, the frictional member 14 is brought into contact with parts 32a to 32c between the bent portions 31a to 31c of the plate spring 30 to thereby support in multiple steps with a large supporting force the angular displacement of the panel unit 4a in the opening direction A1 and in the closing direction A2, and particularly, an undesired angular displacement of the panel unit 4a in the closing direction A2 due to the weight of the panel unit 4 can be prevented with reliability.

Moreover, since the area of contact of the plate spring 30 with the frictional member 14 is, for example, linear and small under a condition where one of the bent portions 31a to 31c is in contact with the frictional member 14, the panel unit 4 can be angularly displaced with a small operating force both in the opening direction A1 and in the closing direction A2. Thus, a tilt holding force appropriate for the weight of the tilting portion can be obtained with a simple structure.

According to yet another embodiment of the invention, instead of the rough sheet 20, a rubber tube 33 may be attached to the plate spring 30 of the embodiment shown in FIGs. 7 to 9 as shown by the virtual line of FIG. 7. By doing this, a moderate frictional force is obtained by the sliding contact between the frictional member 14 and the rubber tube 33, the edges of the plate spring 30 on the side that is in contact with the frictional member 14 are covered with the rubber tube 33, and the edges prevent the frictional member 14 from wearing away, so that the durability of the frictional member 14 is improved.

While a structure controlling tilting of the panel unit 4 as the tilting portion is described in the above-described embodiments, in other embodiments of the invention, the tilting portion may be an apparatus other than the panel unit 4, for example, an operation panel provided with only a plurality of operation keys. Moreover, the electronic apparatus may be an apparatus other than the above-described telephone having a facsimile function, for example, a personal computer. In this case, the invention can be implemented for controlling tilting of a display panel as the tilting portion.

According to still another embodiment of the invention, only one plate may be provided on the rear surface of the panel unit 4 as the sliding member so as to slide on one side of the frictional member 14, or one plate may be inserted in a notch formed in the center of the free end of the frictional member, so as to be supported from both sides thereof by the frictional member 14. In this case, since only one plate is used, the number of parts is reduced, and further, a large sliding frictional force can be obtained by the frictional member being in contact with both surfaces of the plate.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. An electronic apparatus (1, 1a) comprising:
an electronic apparatus body (6);
a tilting portion (4) provided on the electronic apparatus body (6) so as to be angularly displaceable about a rotation axis line (L1);
an attachment portion (15) provided on the electronic apparatus body (6) so as to protrude while facing the tilting portion (4);
a frictional member (14) made of a material having flexibility and elasticity, and attached to the attachment portion (15); and
a sliding member (11, 12) provided on a rear surface of the tilting portion (4) which rear surface faces the attachment portion (15), for sliding on the frictional member (14) over an angular displacement range of the tilting portion (4).

2. The electronic apparatus (1, 1a) of claim 1, wherein the sliding member (11) includes a plate (18a, 18b) for sliding on a side (17a, 17b) of the frictional member (14) over the angular displacement range of the tilting portion (4).

3. The electronic apparatus (1, 1a) of claim 1, wherein the sliding member (12) includes a plate spring (19) for elastically pushing a free end (17c) of the frictional member (14) over the angular displacement range of the tilting portion (4).

4. The electronic apparatus (1, 1a) of claim 1, wherein the sliding member (11) includes a plate (18a, 18b) for sliding on a side (17a, 17b) of the frictional member (14) over the angular displacement range of the tilting portion (4), an area of contact of the sliding member (11) with the side (17a, 17b) of the frictional member (14) decreases as the tilting portion (4) is angularly displaced in an opening direction (A1) with respect to the electronic apparatus (6), and the area of contact of the sliding member (11) with the side (17a, 17b) of the frictional member (14) increases as the tilting portion (4) is angularly displaced in a closing direction (A2) with respect to the electronic apparatus (6).

5. The electronic apparatus (1) of claim 1, wherein the sliding member (12) includes a plate spring (19) for elastically pushing a free end (17c) of the frictional member (14) over the angular displacement range of the tilting portion (4), and the plate spring (19) has a rough sliding surface (20a) having a higher sliding frictional force on the frictional member (14) than that of the plate spring (19).

6. The electronic apparatus (1a) of claim 1, wherein the sliding member (12) includes a plate spring (30) for elastically pushing a free end (17c) of the frictional member (14) over the angular displacement range of the tilting portion (4), and on the plate spring (30), a plurality of bent portions (31a, 31b, 31c) convexly bent outward with respect to the rear surface of the tilting portion (4) is formed.

7. The electronic apparatus (1, 1a) of any one of claims 1 to 6, wherein the frictional member (14) is detachably attached to the attachment portion (15).

8. The electronic apparatus (1, la) of any one of claims 1 to 6, wherein the attachment portion (15) includes a protrusion (24) which is inserted into the frictional member (14) and a latching portion (25) formed integrally with the protrusion (24) so as to bend downward from the tip of the protrusion (24), and the frictional member (14) includes an insertion hole (37) formed so as to be opened downward through an opening (121) to allow the latching portion (25) to pass therethrough and is detachably attached to the attachment portion (15).
